# FASCICULE DE BREVET EUROPEEN

(11) **EP 2 674 230 B1**
(45) Date de publication et mention de la délivrance du brevet: **14.10.2015**
(21) Numéro de dépôt: 13171615.1
(22) Date de dépôt: 12.06.2013
(51) Int. Cl.: B09C 1/00, B09C 1/06

(54) **Procede et installation de traitement d'un sol contenant au moins un polluant a extraire**
Verfahren und Anlage zur Aufbereitung von Erde, die mindestens einen zu extrahierenden Schadstoff enthält
Method and installation for treating a soil containing at least one pollutant to be extracted

(30) Priorité: 12.06.2012 FR 1255504
(43) Date de publication de la demande: 18.12.2013
(73) Titulaire: GRS Valtech, 69517 Vaulx-en-Velin Cedex (FR)
(72) Inventeur: Gerland Emmanuel, 69520 Grigny (FR); Bourdin, Christophe, 69580 Sathonay Village (FR)
(74) Mandataire: Cabinet Plasseraud

(56) Documents cités:
- US-A1- 2004 228 690
- US-B1- 6 543 539

## Description

L'invention se rapporte à un procédé et à une installation de traitement d'un sol contenant au moins un polluant à extraire.

En particulier, l'invention se rapporte à un procédé de traitement du type prévoyant de :
- chauffer le sol à une température adaptée pour produire dans le sol des vapeurs comprenant le polluant dans un état gazeux,
- capter les vapeurs par l'intermédiaire d'un système de captage comprenant au moins un puits d'extraction enfoncé dans le sol.

Un tel procédé de traitement, dit SVTE pour *Soil Venting Thermal Extraction,* mis en oeuvre in situ pour dépolluer le sol d'un site permet notamment de s'affranchir des travaux d'excavation et des problèmes de transport et de stockage qu'ils engendrent. Il permet ainsi de réduire les nuisances pour l'environnement et, le cas échéant, la population à proximité du site traité. Il permet également d'augmenter la rapidité du traitement de dépollution. En ce sens, sans toutefois y être limité, le procédé SVTE répond parfaitement aux contraintes inhérentes à une application en milieu urbain, par exemple pour traiter des pollutions organiques en centre ville, notamment dans le cadre d'une réhabilitation d'un espace urbain dégradé. En outre, les coûts associés à un tel traitement de dépollution peuvent être réduits.

Des procédés de traitement d'un sol conformes au préambule de la revendication 1 et des installations de traitement conformes au préambule de la revendication 9 sont connus des documents US 6 543 539 et US 2004/228690.

L'invention vise à améliorer le procédé de traitement défini précédemment et connu de l'art antérieur.

A cet effet, selon un premier aspect, l'invention propose un procédé de traitement présentant les caractéristiques définies dans la partie caractérisarite de la revendication 1.

Le procédé de traitement selon l'invention utilise une ou plusieurs pointes chauffantes électriques pour chauffer le sol. Il exploite ainsi uniquement la conductivité thermique du sol. Comme ce paramètre est sensiblement constant quelle que soit la nature des terrains, la performance du traitement n'est pas affectée par les hétérogénéités du sol, contrairement à d'autres procédés qui peuvent être tributaires d'autres paramètres, tels que la conductivité hydraulique du sol. De plus, le type de pointe chauffante utilisé offre une répartition et une diffusion de la chaleur améliorées sur toute la longueur de la pointe chauffante. Il en résulte une meilleure uniformité du traitement de dépollution et une diminution de sa durée.

Dans un mode de réalisation, le procédé de traitement peut prévoir, pour chauffer le sol, d'utiliser une poudre hautement compactée de particules réfractaires à la chaleur dans la masse de remplissage.

Par ailleurs, le procédé de traitement peut prévoir, pour chauffer le sol, de disposer une pluralité de pointes chauffantes selon un réseau comprenant au moins deux rangées de pointes chauffantes, chacune des rangées comprenant une pluralité de pointes chauffantes alignées et équidistantes les unes par rapport aux autres, les rangées de pointes chauffantes étant parallèles entre elles.

En outre, le polluant peut présenter une tension de vapeur, le procédé de traitement pouvant prévoir, pour chauffer le sol, de porter chaque pointe chauffante à une température adaptée pour atteindre la tension de vapeur du polluant dans le sol, en particulier à une température comprise entre 400°C et 1000°C.

Le procédé de traitement peut prévoir, pour capter les vapeurs, de disposer au moins deux puits d'extraction à équidistance de chaque pointe chauffante.

Le procédé de traitement peut prévoir, pour capter les vapeurs, de mettre le système de captage en dépression par l'intermédiaire d'un dispositif d'aspiration du système de captage connecté à chaque puits d'extraction.

Le procédé de traitement peut prévoir, en outre, de traiter les vapeurs par l'intermédiaire du système de captage, ledit procédé de traitement prévoyant notamment de réaliser au moins un traitement des vapeurs choisi parmi :
- une recondensation des vapeurs dans une unité de recondensation du système de captage,
- une thermo-oxydation du polluant comprenant un préchauffage suivi d'une oxydation dans une unité de thermo-catalyse du système de captage,
- une photo-oxydation du polluant comprenant une photolyse par rayonnement ultra-violet combinée à une oxydation dans une unité de photo-catalyse du système de captage,
- une filtration en milieu humide dans un bio-filtre du système de captage,
- une filtration sur charbon actif dans un filtre à charbon actif du système de captage.

Le procédé de traitement peut prévoir, en outre, de récupérer et de traiter des eaux par l'intermédiaire du système de captage, ledit procédé de traitement prévoyant notamment de réaliser au moins un traitement des eaux choisi parmi :
- une séparation par différence de densités dans un réservoir du système de captage,
- une extraction de polluant dissout dans les eaux par un fluide traversant lesdites eaux à contre-courant dans un stripper du système de captage,
- une filtration sur charbon actif dans un filtre à charbon actif du système de captage.

Selon un deuxième aspect, l'invention propose une installation de traitement pour mettre en oeuvre le procédé de traitement défini précédemment, ladite installation de traitement comprenant :
- un système de chauffage électrique adapté pour chauffer le sol à une température adaptée pour produire dans le sol des vapeurs comprenant le polluant dans un état gazeux, ledit système de chauffage comprenant au moins une pointe chauffante électrique et un dispositif d'alimentation en énergie électrique, chaque pointe chauffante comprenant une gaine creuse en matériau conducteur de chaleur, au moins un élément chauffant électrique disposé à l'intérieur de la gaine et une masse de remplissage en matériau isolant électriquement et conducteur de chaleur, ladite masse de remplissage remplissant la gaine autour de l'élément chauffant, la gaine de chaque pointe chauffante étant destinée à être enfoncée dans le sol, l'élément chauffant de chaque pointe chauffante étant destiné à être connecté au dispositif d'alimentation,
- un système de captage adapté pour capter les vapeurs, ledit système de captage comprenant au moins un puits d'extraction destiné à être enfoncé dans le sol, le système de captage comprenant au moins un capteur de mesure adapté pour mesurer au moins un paramètre de captage relatif aux vapeurs dans le système de captage, tel qu'un paramètre de captage choisi parmi une concentration, un débit, une pression et une température des vapeurs,
- une unité de commande connectée au capteur de mesure et adaptée pour réguler en température chaque pointe chauffante en fonction du paramètre de captage,
- l'unité de commande étant adaptée pour :
- mémoriser au moins une rampe de consigne commandant une augmentation en température de la pointe chauffante d'une quantité déterminée à des périodes déterminées,
- piloter l'augmentation en température de la pointe chauffante en suivant la rampe de consigne tant que le paramètre de captage est dans une première plage de valeurs déterminée,
- ralentir l'augmentation en température de la pointe chauffante si le paramètre de captage est dans une deuxième plage de valeurs déterminée, distincte de la première plage de valeurs.

Dans un mode de réalisation, la masse de remplissage de chaque pointe chauffante peut comprendre une poudre hautement compactée de particules réfractaires à la chaleur.

Le système de captage peut comprendre un dispositif d'aspiration connecté à chaque puits d'extraction et adapté pour mettre le système de captage en dépression.

Le système de captage peut être adapté, en outre, pour traiter les vapeurs, ledit système de captage comprenant notamment au moins un dispositif de traitement des vapeurs choisi parmi :
- une unité de recondensation adaptée pour réaliser une recondensation des vapeurs,
- une unité de thermo-catalyse adaptée pour réaliser une thermo-oxydation du polluant comprenant un préchauffage suivi d'une oxydation,
- une unité de photo-catalyse adaptée pour réaliser une photo-oxydation du polluant comprenant une photolyse par rayonnement ultra-violet combinée à une oxydation,
- un bio-filtre adapté pour réaliser une filtration en milieu humide,
- un filtre à charbon actif adapté pour réaliser une filtration sur charbon actif.

Le système de captage peut être adapté, en outre, pour récupérer et traiter des eaux, ledit système de captage comprenant notamment au moins un dispositif de traitement des eaux choisi parmi :
- un réservoir adapté pour réaliser une séparation par différence de densités,
- un stripper adapté pour réaliser une extraction de polluant dissout dans les eaux par un fluide traversant lesdites eaux à contre-courant,
- un filtre à charbon actif adapté pour réaliser une filtration sur charbon actif.

D'autres objets et avantages de l'invention apparaîtront à la lecture de la description qui suit d'un mode de réalisation particulier de l'invention donné à titre d'exemple non limitatif, la description étant faite en référence aux dessins annexés dans lesquels :
- la figure 1 est une représentation schématique d'une installation de traitement installée sur un sol contenant un ou plusieurs polluants, l'installation de traitement mettant en oeuvre un procédé de traitement selon un mode de réalisation de l'invention pour extraire le ou les polluants et dépolluer le sol,
- la figure 2 est une représentation en vue de face d'une pointe chauffante électrique utilisée dans l'installation de traitement de la figure 1 pour chauffer le sol de manière à produire dans le sol des vapeurs contenant le polluant à l'état gazeux,
- la figure 3 est une représentation schématique en coupe longitudinale de la pointe chauffante de la figure 2,
- la figure 4 est une représentation schématique d'un réseau de pointes chauffantes électriques et de puits d'extraction d'un système de captage de l'installation de traitement de la figure 1, chaque puits d'extraction étant adapté pour capter les vapeurs produites dans le sol,
- la figure 5 est une représentation en perspective d'une partie du réseau de pointes chauffantes et de puits d'extraction, illustrant une dispersion de chaleur le long de l'une des pointes chauffantes,
- la figure 6 est une représentation schématique d'une unité de recondensation du système de captage de l'installation de traitement de la figure 1 adaptée pour réaliser une recondensation des vapeurs,
- la figure 7 est une représentation schématique d'une unité de photo-catalyse du système de captage de l'installation de traitement de la figure 1 adaptée pour réaliser une photo-oxydation du polluant comprenant une photolyse par rayonnement ultra-violet combinée à une oxydation,
- la figure 8 est une représentation schématique d'un réacteur de l'unité de photo-catalyse de la figure 7,
- la figure 9 est une représentation schématique d'un bio-filtre du système de captage de l'installation de traitement de la figure 1 adapté pour réaliser une filtration en milieu humide,
- la figure 10 est une représentation schématique d'un filtre à charbon actif du système de captage de l'installation de traitement de la figure 1 adapté pour réaliser une filtration sur charbon actif,
- la figure 11 est une représentation schématique de dispositifs de traitement des eaux du système de captage de l'installation de traitement de la figure 1.

Sur les figures, les mêmes références désignent des éléments identiques ou analogues.

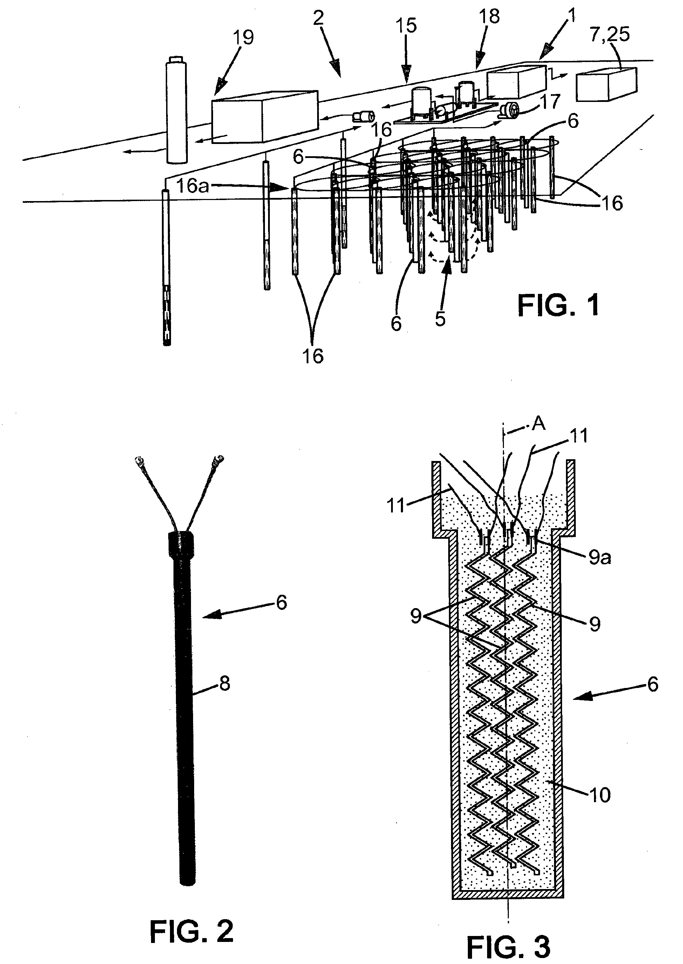

La figure 1 représente une installation de traitement 1 installée sur un site 2 ayant un sol 3 qui contient un ou plusieurs polluants. L'installation de traitement 1 est adaptée à la mise en oeuvre d'un procédé SVTE (pour *Soil Venting Thermal Extraction*) de traitement du sol 3 in situ en vue d'extraire les polluants et de dépolluer le sol 3 du site 2.

L'installation de traitement 1 comprend :
- un système de chauffage 5 adapté pour chauffer le sol 3 de manière à produire dans le sol 3 à traiter des vapeurs contenant les polluants à extraire dans un état gazeux,
- un système de captage 15 adapté pour capter les vapeurs produites dans le sol 3.

Le système de chauffage 5 est électrique et comprend une ou plusieurs pointes chauffantes électriques 6 et un dispositif d'alimentation en énergie électrique 7.

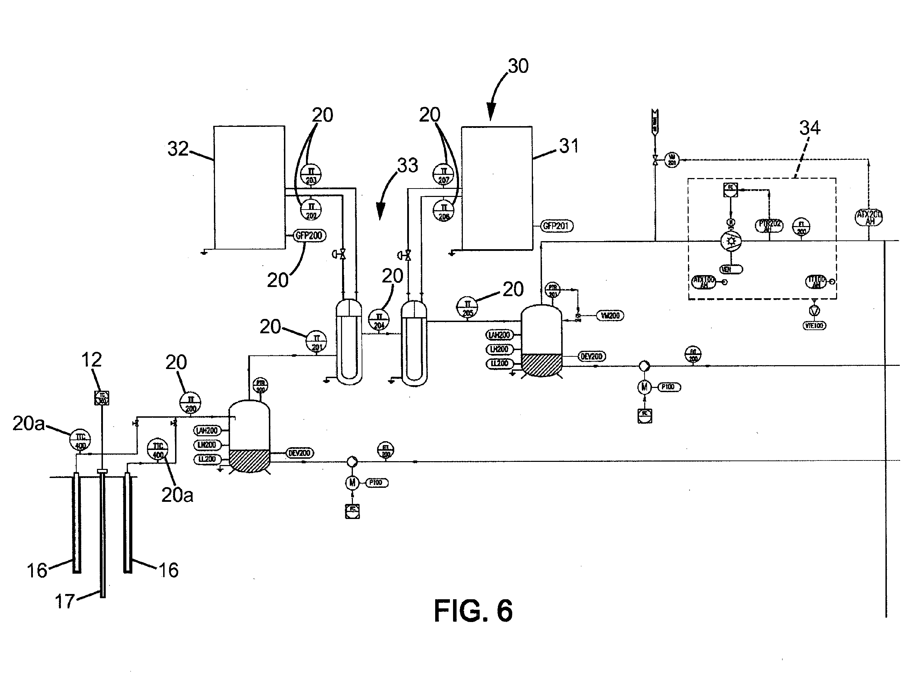

Comme représenté sur les figures 2 et 3, chaque pointe chauffante 6 comprend une gaine 8 creuse en matériau conducteur de chaleur destinée à être enfoncée dans le sol 3. En particulier, la gaine 8 peut être formée par un tube cylindrique, notamment de section circulaire, selon un axe A, de préférence rectiligne, en métal tel que de l'acier. A l'intérieur de la gaine 8, la pointe chauffante 6 comprend également un à trois éléments chauffants électriques, tels que des résistances électriques 9 en forme de serpentin, et une masse de remplissage 10 dans laquelle les résistances électriques 9 sont noyées. La masse de remplissage 10 peut être constituée d'une poudre hautement compactée de particules réfractaires à la chaleur, en matériau isolant électriquement et conducteur de chaleur, tel que de l'oxyde de magnésium ou magnésie (MgO). Chaque résistance électrique 9 comporte à une extrémité supérieure 9a, destinée à être placée du côté d'une surface horizontale extérieure du sol 3, des connecteurs 11 agencés pour permettre une connexion électrique de la résistance électrique 9 au dispositif d'alimentation 7. Chaque pointe chauffante 6 peut également être équipée d'un thermocouple 12 (visible sur la figure 6) ayant pour objectif de la protéger contre des sur-températures et permettant également de réguler sa température et donc l'énergie délivrée comme il apparaîtra de la suite de la description.

L'invention n'est pas limitée à la structure précédemment décrite de la pointe chauffante 6. En variante, chaque pointe chauffante 6 pourrait comprendre une seule résistance électrique 9. Par ailleurs, chaque résistance électrique 9 pourrait être insérée dans un tube intermédiaire conducteur de chaleur reçu dans la gaine 8, la résistance électrique 9 étant calée à l'intérieur du tube intermédiaire par une masse de remplissage en matériau isolant électriquement et conducteur de chaleur identique ou différente d'une éventuelle masse de remplissage entre le tube intermédiaire et la gaine 8. En outre, d'autres matériaux isolants électriquement et conducteurs de chaleur sous d'autres formes pourraient être utilisés.

Des exemples de pointes chauffantes 6 pouvant être mises en oeuvre dans le système de chauffage 5 de l'installation de traitement 1 selon l'invention sont décrits dans les brevets US 2 767 288, US 3 305 820 et US 3 340 382. Des pointes chauffantes 6 commercialisées par la société WATLOW® sous la marque MULTICELL® peuvent notamment être utilisées.

Le système de captage 15 comprend un ou plusieurs puits d'extractions 16, un dispositif d'aspiration 17, un ou plusieurs dispositifs de traitement des vapeurs 18 et un ou plusieurs dispositifs de traitements des eaux 19.

Chaque puits d'extraction 16 est destiné à être enfoncé dans le sol 3. Le puits d'extraction 16 peut être réalisé en un tube cylindrique, notamment de section circulaire, selon un axe B, de préférence rectiligne, en métal tel que de l'acier. En particulier, le tube peut présenter une paroi pleine sur une longueur du tube déterminée, par exemple 3 m, depuis une extrémité supérieure 16a destinée à être placée du côté de la surface horizontale extérieure du sol 3. La paroi du tube peut être crépinée sur le reste de la longueur du tube. Un bouchon, par exemple en bentonite ou assimilé, peut être agencé sur une partie de la paroi pleine afin d'assurer une parfaite étanchéité, par exemple à une distance de 2 m de l'extrémité supérieure du tube. Une partie annulaire sur la paroi crépinée peut être comblée par un élément filtrant tel qu'un gravier filtrant roulé calibré. Chaque puits d'extraction 16 peut être équipé d'une tête de puits sur laquelle sont aménagés des piquages afin de pouvoir réaliser un échantillonnage des gaz du sol pris dans les vapeurs.

Le système de captage 15 comprend un ou plusieurs capteurs de mesure 20 adaptés chacun pour mesurer un paramètre de captage relatif aux vapeurs produites dans le sol, tel qu'une température, une pression, une concentration ou un débit des vapeurs. Des thermocouples 20a couplés à des capteurs de mesure de dépression de contrôle peuvent ainsi être mis en place dans les piquages prévus sur chaque tête de puits.

L'installation de traitement 1 comprend également une unité de commande 25 connectée aux capteurs de mesures 20 et programmée pour commander le fonctionnement de l'installation de traitement 1 en fonction de données concernant le sol 3 recueillies préalablement au traitement mais également des paramètres de captage mesurés au cours du traitement.

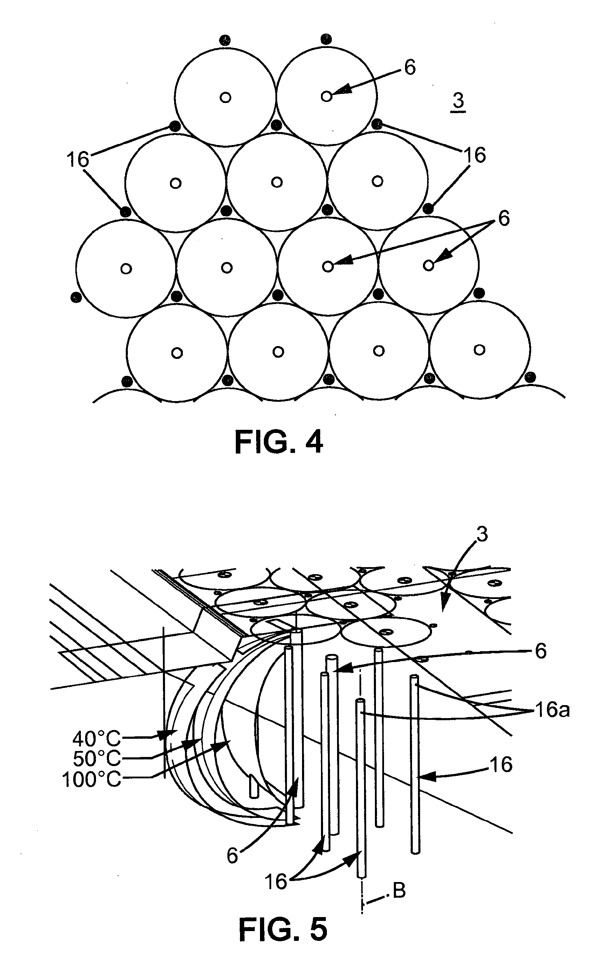

Sur les figures 1 et 4, la gaine 8 de chaque pointe chauffante 6 est enfoncée dans le sol 3 à traiter sol jusqu'à une profondeur souhaitée, définie selon les paramètres géologiques, hydrogéologiques et les concentrations mesurées dans un état initial. En particulier, plusieurs pointes chauffantes 6 sont disposées selon un réseau comprenant plusieurs rangées, par exemple quatre sur la figure 4, de pointes chauffantes 6. Chaque rangée comprend une pluralité de pointes chauffantes 6 alignées et écartées les une des autres selon un pas déterminé. Chaque pointe chauffante 6 est alors disposée à équidistance des pointes chauffantes 6 adjacentes de la même rangée. Sur la figure 4, deux rangées adjacentes sont parallèles entre elles et décalées d'un demi-pas. Les connecteurs 11 des résistances électriques 9 sont connectés au dispositif d'alimentation 7.

Le réseau comprend également plusieurs puits d'extraction 16 enfoncés dans le sol 3 à une profondeur variable, au coeur du panache de pollution. Au moins deux puits d'extraction 16, par exemple trois sur la figure 4, sont disposés à équidistance de chaque pointe chauffante 6. Chaque puits d'extraction 16 est relié aux autres puits d'extraction 16 du réseau par l'intermédiaire d'un flexible métallique et d'une vanne permettant d'isoler (isolement gazeux) le puits d'extraction 16 du reste du réseau. L'ensemble des puits d'extraction 16 du réseau et des flexibles entièrement métalliques permet de garantir la totale équipotentialité du système de captage 15. Le réseau de puits d'extraction 16 est, par ailleurs, connecté au dispositif d'aspiration 17, tel qu'un ventilateur d'extraction, pour pouvoir mettre le système de captage 15 en dépression.

Selon le procédé SVTE, le sol 3 est chauffé en place au droit des zones contaminées à une température permettant d'atteindre une tension de vapeur des polluants suffisante afin de faciliter leur extraction par *venting.* Suivant le type de polluant, les pointes chauffantes 6 peuvent délivrer une puissance de 1,5 kW par mètre et être portées à une température comprise entre 400°C et 1000°C. Une dispersion de chaleur représentée sur la figure 5 peut alors s'opérer jusqu'à atteindre la température minimum en limite de rayon d'action permettant d'atteindre la tension de vapeur des polluants prévue.

La puissance des pointes chauffantes 6 est régulée par des variateurs de puissance à découpage. En particulier, l'unité de commande 25 peut réguler en température chaque pointe chauffante 6 en fonction d'un ou plusieurs paramètres de captage. La montée en température de la zone à dépolluer dépend de la température des pointes chauffantes 6 et de la courbe de réponse du terrain. Afin de maitriser celle-ci, la montée en température des pointes chauffante 6 se fait par l'intermédiaire d'une rampe de consigne mémorisée dans l'unité de commande 25 et commandant une augmentation en température de la pointe chauffante 6 d'une quantité déterminée, par exemple 100°C, à des périodes déterminées, par exemple chaque semaine.

L'unité de commande 25 pilote l'augmentation en température de la pointe chauffante 6 en suivant la rampe de consigne tant que le ou les paramètres de captage sont dans des premières plages de valeurs déterminées respectives.

La montée en température n'est, de préférence, pas accélérée. Lorsque le ou les paramètres de captage se trouvent dans des deuxièmes plages de valeurs déterminées respectives, distinctes des premières plages de valeurs, en particulier, lorsque le ou les paramètres de captage sortent de leurs premières plages de valeurs respectives, la montée en température de chaque pointe chauffante 6 pourra être ralentie en fonction notamment des concentrations extraites, des dépressions et des températures mesurées sur les têtes de puits.

Sous l'effet de la chaleur, les polluants passent à l'état gazeux puis sont captés par les puits d'extraction 16 du système de captage 15 mis en dépression.

Dans le mode de réalisation représenté, le système de captage 15 comprend également plusieurs dispositifs de traitement des vapeurs 18.

La figure 6 représente une unité de recondensation 30 assurant un prétraitement des vapeurs qui consiste en une recondensation des vapeurs extraites par les puits d'extraction 16 par le passage à travers un système d'échangeurs de chaleur et de dévésiculeurs. L'unité de recondensation comprend un groupe froid 31, un aéroréfrigérant 32 et un conteneur « skid de condensation - échangeur dévésiculeur » 33 permettant de refroidir les vapeurs à une température de 7°C. Tous les liquides issus de cette recondensation sont transférés aux dispositifs de traitement des eaux 19, décrits plus loin.

L'ensemble du système du captage 15 est considéré comme une zone ATEX 1 ou 2 et traité comme telle. Un ventilateur 34 maintient une dépression dans l'unité de recondensation 30. Le ventilateur 34 ainsi que l'aval de l'unité de recondensation 30 sont déclassés en zone sans danger par l'intermédiaire d'une régulation d'une valeur d'explosivité agissant sur une vanne de dilution. La régulation est, par exemple, calée à un maximum de 25% de la L.I.E (Limite Inférieure d'Explosivité) avec une coupure en sécurité à 50%. Ces valeurs pourront être calibrées et calées sur les gaz les plus contraignants.

L'ensemble des paramètres de captage concernant notamment la température en entrée et en sortie, la dépression en amont et en aval et l'explosivité peuvent être mesurés par des capteurs de mesure 20 appropriés et enregistrés en continu par l'unité de commande 25. Ils pourront, par ailleurs, être édités à tout moment, par exemple sous forme de tableaux et/ou de graphiques.

Le système de captage 15 peut également comprendre une unité de thermo-catalyse (CATOX). Le principe de la thermo-catalyse consiste à oxyder violemment les polluants organiques de façon à produire essentiellement du CO₂ et de l'eau. Pour produire cette oxydation, les vapeurs sont préchauffées puis introduites dans un réacteur catalytique. Le préchauffage peut, par exemple, être assuré par des résistances électriques. Pour garantir une bonne efficacité, les vapeurs sont introduites dans le réacteur catalytique à une température minimum de 320°C.

A titre d'exemple non limitatif, les caractéristiques de l'unité de thermo-catalyse qui peur être mise en oeuvre sont les suivantes :
- débit d'air traité de 1000 m³/h,
- concentration maximum en entrée : 15 % de L.I.E (Hexane),
- dimensions : 6000 mm x 2500 mm x 2700 mm,
- masse : 5 tonnes,
- puissance électrique installée : 50 kW.

La réaction est fortement exothermique. La chaleur générée dans le réacteur catalytique permet d'assurer, par l'intermédiaire d'un échangeur thermique, une partie (ou la totalité en conditions auto-thermes) du réchauffage des vapeurs entrantes. Cette augmentation de température constitue également une limite technique pour les concentrations maximales admissibles dans les vapeurs entrantes (température maximale admissible en sortie de catalyseur : 480°C à 500°C). Par conséquent, dans l'exemple précité, les vapeurs sont introduites dans l'unité de thermo-catalyse avec un flux d'entrée limité à 11 g/m³.

L'unité de thermo-catalyse peut être montée en conteneur, équipée d'une armoire de commande et d'un ensemble d'automatismes et de modules de sécurité nécessaires, tels qu'un automate programmable à régulation PID pour le contrôle de préchauffage des vapeurs, des vannes automatiques de fermeture du réseau du système de captage 15 en cas d'anomalie, une vanne de dilution en cas d'arrivée de concentrations trop élevées (risque de montée en température), un contrôle et un enregistrement des débits et des concentrations.

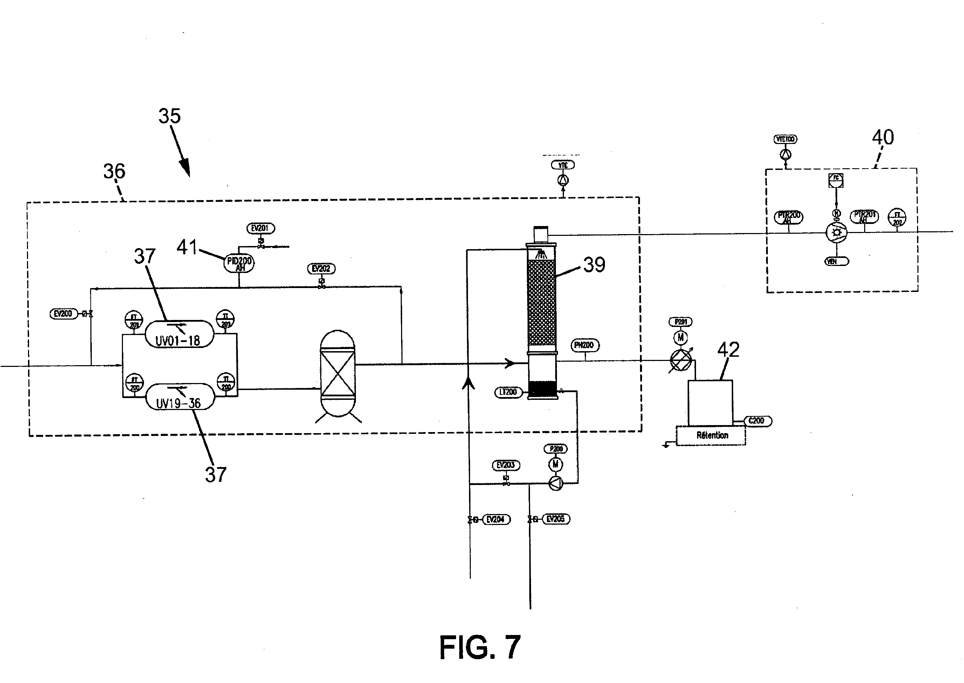

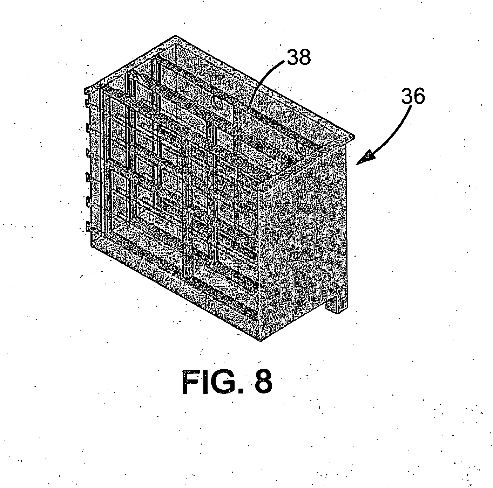

Les figures 7 et 8 représentent une unité de photo-catalyse 35 du système de captage 15 de l'installation de traitement 1. L'unité de photo-catalyse 35 réalise une photo-oxydation au cours de laquelle les vapeurs polluées peuvent être traités à basse température. A titre d'exemple non limitatif, la photo-oxydation est de type ultra-violet (UV) catalysée.

L'unité de photo-catalyse 35 comprend un réacteur photo-catalytique 36, représenté sur la figure 8, dans lequel de nombreuses réactions se produisent. En premier lieu, une photolyse de la molécule notée R-R (comme par exemple du cis 1,2 dichloro-éthylène) sous l'effet d'un rayonnement UV produit par des sources UV 37 est observé.

La réaction de photolyse s'écrit :

R-R + hv → R° + R° (longueur d'onde inférieure à 250 nm)

Les produits de cette photolyse réagissent ensuite avec différents agents oxydants produits en même temps dans le réacteur photo-catalytique 36 à partir de l'oxygène de l'air ou de l'humidité du flux de vapeurs. Le dioxygène de l'air subit également une photolyse dont il résulte une formation d'ozone selon les réactions suivantes :

O₂ + hv → 2O° (longueur d'onde inférieure à 190 nm)

O₂ + O° → O3 (longueur d'onde inférieure à 190 nm)

Cette réaction est réversible pour une longueur d'onde inférieure à 250 nm.

L'humidité du flux d'air permet également la production du radical OH° qui possède un fort pouvoir oxydant selon la réaction suivante :

H₂O + hv → H° + OH° (longueur d'onde inférieure à 190 nm)

Le réacteur photo-catalytique 35 peut avantageusement faire appel à un catalyseur TiO2 fixé sur un support 38 hybride alliant le dioxyde de titane et du charbon actif. L'adsorption de polluants sur un substrat inerte possédant une forte porosité et leur diffusion vers les particules de TiO2 permet d'augmenter localement les concentrations et donc les cinétiques de dégradation. De plus, les intermédiaires de réaction ont une forte probabilité de se réabsorber sur le support et d'être à nouveau dégradés. Ils sont donc faiblement libérés dans l'atmosphère.

L'unité de photo-catalyse 35 permet d'obtenir un excellent rendement sur les solvants chlorés ou encore, dans une moindre mesure, sur les BTEX. L'efficacité est cependant plus limitée sur les hydrocarbures alcanes et les éthanes (au mieux 40%).

La réaction de photo-oxydation produit au final du CO₂, de l'eau et de l'acide chlorhydrique HCI. L'acide chlorhydrique peut être éliminé à l'aide d'une tour de lavage 39 dans laquelle un lavage est effectué à l'eau additionné de soude NaOH. Le Ph est régulé à 8 afin d'obtenir un bon rendement de lavage. La déconcentration est commandée par une mesure de conductivité. Les eaux de déconcentration sont renvoyées sur le traitement des eaux.

Chaque unité de photo-catalyse 35 peut être équipée d'une mesure Hct par photo ionisation (PID) 41 afin de suivre son rendement de dégradation et d'un ventilateur 40 permettant de garantir une dépression à l'intérieur du réacteur photo-catalytique 36 et d'éviter ainsi tout risque de fuite d'ozone. L'unité de photo-catalyse 35 peut également être équipée de capteurs de mesure 20 de débit, de pression et de température en continu afin de suivre son bon fonctionnement, des tableaux et des graphiques de suivi pouvant être extraits des mesures effectuées par les capteurs de mesure.

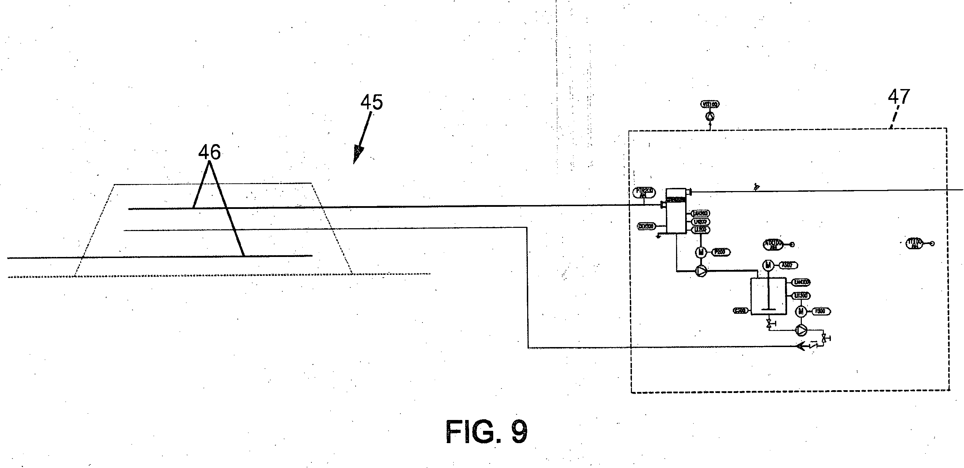

L'unité de photo-catalyse 35 ne garantissant un rendement que de 40% à 90%, un étage de traitement par bio-filtre 45, représenté sur la figure 9, peut être mis en place. En particulier, le bio-filtre 45 peut être optimisé avec un système de gestion de l'humidité, un arrosage en continu, une récupération des eaux et/ou une bio-stimulation,

Le bio-filtre 45 est, par exemple, réalisé sous forme d'andain équipé de membranes 46 au-dessus et en-dessous afin de garantir son étanchéité. Sa composition principale est à base de compost permettant une meilleure diffusion que d'autres éléments plus grossiers type écorces, etc. Du charbon actif peut être intégré à sa composition, permettant ainsi de gommer les pics de pollutions. Le principal paramètre garantissant un rendement important du bio-filtre en fonctionnement est son taux d'humidité. Pour garantir un taux optimum d'humidité, le bio-filtre peut être arrosé en permanence. Les percolas sont récupérés et passent par un réacteur de bio-stimulation 47, avant d'être réinjectés. Le réacteur de bio-stimulation 47 peut être régulé en température, équipé d'un système d'aération et d'un système de dosage de nutriments. Le rendement du bio-filtre 45 peut être contrôlé par les analyseurs de COV à photo-ionisation (PID)

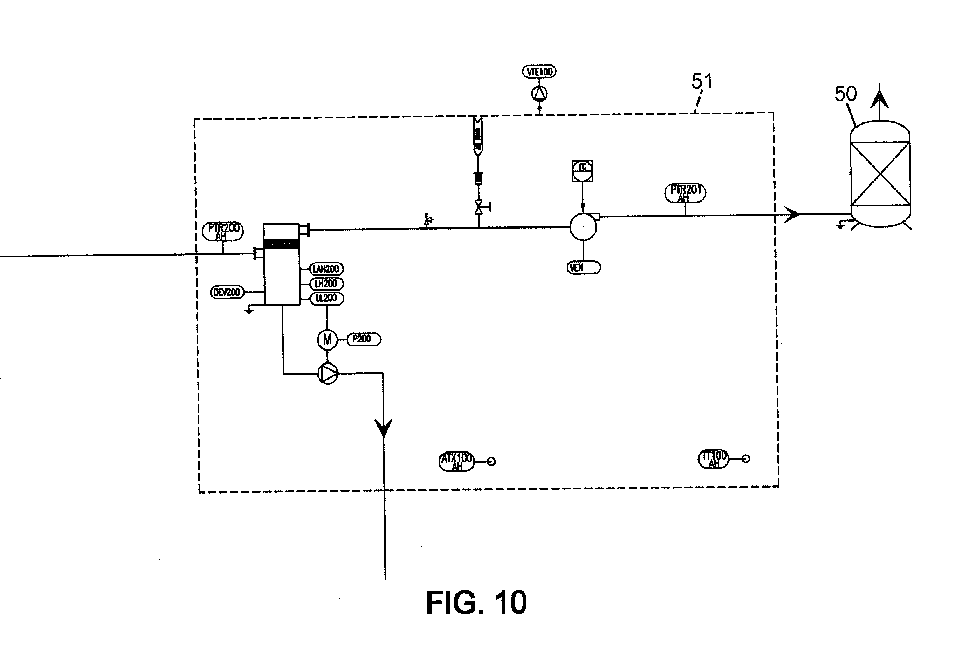

Sur la figure 10, un traitement de finition de l'air peut être opéré sur charbon actif avant rejet à l'atmosphère afin de garantir les seuils de rejets admissibles. Pour ce faire un filtre à charbon actif 50 peut être équipé d'un ventilateur 51 et de sondes de mesure de dépression aval et de mesure de pression amont afin de garantir, d'une part, l'absence de fuite et, d'autre part, que le charbon n'est pas colmaté. Chaque filtre à charbon actif 50 peut être équipé d'un analyseur de COV à photo-ionisation PID qui mesure par séquençage l'entrée et la sortie du filtre afin de garantir son bon fonctionnement et la conformité des rejets. Les valeurs du PID ainsi que les pressions et dépressions peuvent être enregistrées en continu par l'unité de commande.

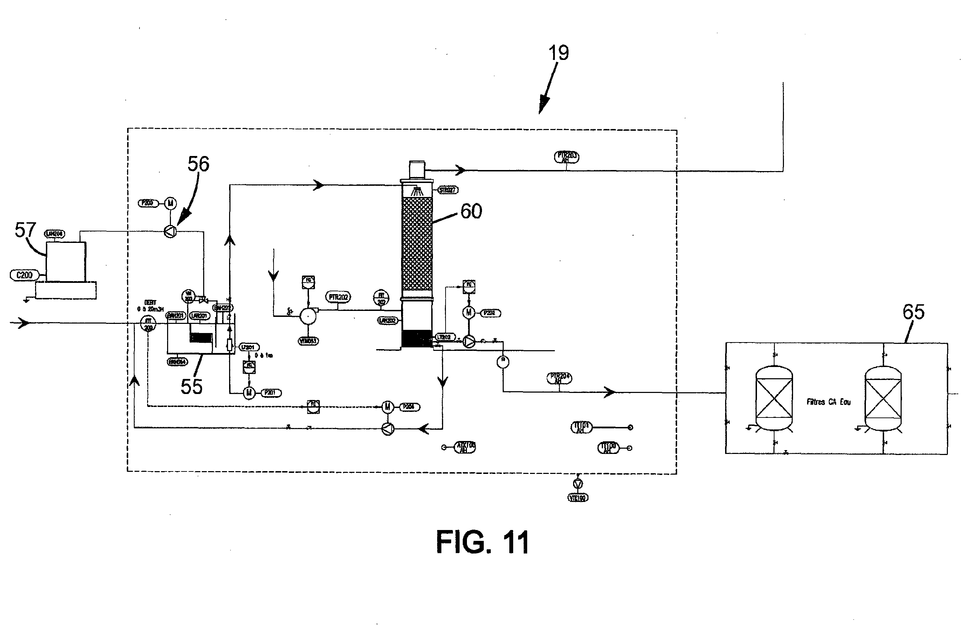

L'ensemble des eaux, incluant tout type de liquide, résultant du traitement de vapeurs peuvent être récupérées par différents dispositifs de traitement des eaux 19 du système de captage 15 représentés sur la figure 11.

Les eaux peuvent, en particulier, être dirigées vers une cuve tampon 42 (visible sur la figure 7) qui permet de gérer les fluctuations de débit et de renvoyer un débit stabilisé vers les dispositifs de traitement des eaux 19.

Le système de captage 15 peut notamment comprendre un réservoir 55 adapté pour réaliser une séparation des liquides par différence de densités. Le réservoir 55 peut être équipé d'un premier étage de « déshuilage » permettant de récupérer aussi bien les surnageants que les coulants à l'aide d'un jeu d'électrovannes EV et d'une pompe péristaltique 56 commandée par des sondes d'interfaces. Les flottants et coulants récupérés peuvent être stockés dans un cubitainer sur rétention 57.

Les eaux récupérées peuvent également être traitées sur un stripper 60, par exemple du type à colonne, dans lequel un fluide traversant les eaux à contre-courant est utilisé pour dissoudre les polluants. Les eaux peuvent ensuite être filtrées sur charbon actif dans un ou plusieurs filtres à charbon actif 65 avant rejet aux eaux usées.

L'unité de commande 25 est connectée à chacun des dispositifs de traitement des vapeurs 18 et des eaux 19 pour les commander et, le cas échéant, enregistrer les données et les paramètres de captage mesurés notamment par les capteurs de mesure 20 du système de captage 15.

Pour assurer un contrôle du traitement réalisé par l'installation de traitement 1 décrite précédemment, une mesure de la concentration de polluant dans l'air extrait peut être réalisée, ainsi qu'un calcul de la quantité de polluant dans l'air extrait par intégration avec le débit. Un pesage du volume de polluant extrait en phase liquide lors de l'envoi en élimination peut également être réalisé. Par ailleurs, l'extraction des vapeurs dans chacun des puits d'extraction 16 peut être ajustée par contrôle des concentrations au PID et des dépressions à l'aide d'un manomètre électronique lors de campagnes de suivi. En outre, des opérations ponctuelles de suivi, de prélèvements, de campagnes d'analyses ainsi que des opérations de maintenance peuvent être effectuées par des équipes spécifiques.

Un suivi de la dépollution peut être fait principalement par le suivi des quantités extraites et des concentrations sur chaque puits d'extraction. Ces quantités et concentrations augmentent dans un premier temps au fur et à mesure de la montée en température du système de chauffage 5. Une fois que le système de chauffage 5 a atteint son niveau optimum, elles diminuent suivant une courbe de décroissance exponentielle.

Bien que décrits en combinaison les uns avec les autres au sein d'une même installation de traitement 1, les traitements décrits précédemment pourraient être réalisés indépendamment les uns des autres. En outre, seule une partie de ces traitements pourrait être réalisée. Pour ce faire, chacun des dispositifs pour mettre en oeuvre les traitements peut être utilisé indépendamment des autres dispositifs et seule une partie des dispositifs pour mettre en oeuvre les traitements peut être utilisée. De plus, un ou plusieurs des traitements décrits précédemment, de même que un ou plusieurs des dispositifs décrits précédemment, pourraient être mis en oeuvre dans d'autres applications que celle du traitement de dépollution d'un sol et, en particulier, dans une autre installation que celle décrite précédemment. Les traitements et les unités correspondantes peuvent donc être indépendants notamment de l'utilisation des pointes chauffantes électriques.

## Revendications

1. Procédé de traitement d'un sol (3) contenant au moins un polluant à extraire, ledit procédé de traitement prévoyant de :
- chauffer le sol (3) à une température adaptée pour produire dans le sol (3) des vapeurs comprenant le polluant dans un état gazeux,
- capter les vapeurs par l'intermédiaire d'un système de captage (15) comprenant au moins un puits d'extraction (16) enfoncé dans le sol (3),
ledit procédé de traitement prévoyant, pour chauffer le sol (3), de :
- utiliser un système de chauffage (5) électrique comprenant au moins une pointe chauffante (6) électrique et un dispositif d'alimentation (7) en énergie électrique, chaque pointe chauffante (6) comprenant une gaine (8) creuse en matériau conducteur de chaleur, au moins un élément chauffant (9) électrique disposé à l'intérieur de la gaine (8) et une masse de remplissage (10) en matériau isolant électriquement et conducteur de chaleur, ladite masse de remplissage (10) remplissant la gaine (8) autour de l'élément chauffant (9),
- enfoncer la gaine (8) de chaque pointe chauffante (6) dans le sol (3),
- connecter l'élément chauffant (9) de chaque pointe chauffante (6) au dispositif d'alimentation (7),
- mesurer au moins un paramètre de captage relatif aux vapeurs dans le système de captage (15), tel qu'un paramètre de captage choisi parmi une concentration, un débit, une pression et une température des vapeurs, par au moins un capteur de mesure (20) du système de captage (15),
- réguler en température chaque pointe chauffante (6) en fonction du paramètre de captage par une unité de commande (25) connectée au capteur de mesure (20),
ledit procédé de traitement étant **caractérisé en ce qu'**il prévoit, pour réguler en température chaque pointe chauffante (6), de :
- mémoriser au moins une rampe de consigne commandant une augmentation en température de la pointe chauffante (6) d'une quantité déterminée à des périodes déterminées,
- piloter l'augmentation en température de la pointe chauffante (6) en suivant la rampe de consigne tant que le paramètre de captage est dans une première plage de valeurs déterminée,
- ralentir l'augmentation en température de la pointe chauffante (6) si le paramètre de captage est dans une deuxième plage de valeurs déterminée, distincte de la première plage de valeurs.

2. Procédé de traitement selon la revendication 1, prévoyant, pour chauffer le sol (3), d'utiliser une poudre hautement compactée de particules réfractaires à la chaleur dans la masse de remplissage (10).

3. Procédé de traitement selon la revendication 1 ou 2, prévoyant, pour chauffer le sol (3), de disposer une pluralité de pointes chauffantes (6) selon un réseau comprenant au moins deux rangées de pointes chauffantes (6), chacune des rangées comprenant une pluralité de pointes chauffantes (6) alignées et équidistantes les unes par rapport aux autres, les rangées de pointes chauffantes (6) étant parallèles entre elles.

4. Procédé de traitement selon l'une quelconque des revendications 1 à 3, dans lequel le polluant présente une tension de vapeur, ledit procédé de traitement prévoyant, pour chauffer le sol (3), de porter chaque pointe chauffante (6) à une température adaptée pour atteindre la tension de vapeur du polluant dans le sol (3), en particulier à une température comprise entre 400°C et 1000°C.

5. Procédé de traitement selon l'une quelconque des revendications 1 à 4, prévoyant, pour capter les vapeurs, de disposer au moins deux puits d'extraction (16) à équidistance de chaque pointe chauffante (6).

6. Procédé de traitement selon l'une quelconque des revendications 1 à 5, prévoyant, pour capter les vapeurs, de mettre le système de captage (15) en dépression par l'intermédiaire d'un dispositif d'aspiration (17) du système de captage (15) connecté à chaque puits d'extraction (16).

7. Procédé de traitement selon l'une quelconque des revendications 1 à 6, prévoyant, en outre, de traiter les vapeurs par l'intermédiaire du système de captage (15), ledit procédé de traitement prévoyant notamment de réaliser au moins un traitement des vapeurs choisi parmi :
- une recondensation des vapeurs dans une unité de recondensation (30) du système de captage (15),
- une thermo-oxydation du polluant comprenant un préchauffage suivi d'une oxydation dans une unité de thermo-catalyse du système de captage (15),
- une photo-oxydation du polluant comprenant une photolyse par rayonnement ultra-violet combinée à une oxydation dans une unité de photo-catalyse (35) du système de captage (15),
- une filtration en milieu humide dans un bio-filtre (45) du système de captage (15),
- une filtration sur charbon actif dans un filtre à charbon actif (50) du système de captage (15).

8. Procédé de traitement selon l'une quelconque des revendications 1 à 7, prévoyant, en outre, de récupérer et de traiter des eaux par l'intermédiaire du système de captage (15), ledit procédé de traitement prévoyant notamment de réaliser au moins un traitement des eaux choisi parmi :
- une séparation par différence de densités dans un réservoir (55) du système de captage (15),
- une extraction de polluant dissout dans les eaux par un fluide traversant lesdites eaux à contre-courant dans un stripper (60) du système de captage (15),
- une filtration sur charbon actif dans un filtre à charbon actif (65) du système de captage (15).

9. Installation de traitement (1) pour mettre en oeuvre le procédé de traitement selon l'une quelconque des revendications 1 à 8, ladite installation de traitement (1) comprenant :
- un système de chauffage (5) électrique adapté pour chauffer le sol (3) à une température adaptée pour produire dans le sol (3) des vapeurs comprenant le polluant dans un état gazeux, ledit système de chauffage (5) comprenant au moins une pointe chauffante (6) électrique et un dispositif d'alimentation (7) en énergie électrique, chaque pointe chauffante (6) comprenant une gaine (8) creuse en matériau conducteur de chaleur, au moins un élément chauffant (9) électrique disposé à l'intérieur de la gaine (8) et une masse de remplissage (10) en matériau isolant électriquement et conducteur de chaleur, ladite masse de remplissage (10) remplissant la gaine (8) autour de l'élément chauffant (9), la gaine (8) de chaque pointe chauffante (6) étant destinée à être enfoncée dans le sol (3), l'élément chauffant (9) de chaque pointe chauffante (6) étant destiné à être connecté au dispositif d'alimentation (7),
- un système de captage (15) adapté pour capter les vapeurs, ledit système de captage (15) comprenant au moins un puits d'extraction (16) destiné à être enfoncé dans le sol (3), le système de captage (15) comprenant au moins un capteur de mesure (20) adapté pour mesurer au moins un paramètre de captage relatif aux vapeurs dans le système de captage (15), tel qu'un paramètre de captage choisi parmi une concentration, un débit, une pression et une température des vapeurs,
- une unité de commande (25) connectée au capteur de mesure (20) et adaptée pour réguler en température chaque pointe chauffante (6) en fonction du paramètre de captage, l'unité de commande (25) étant **caractérisée par le fait qu'**elle est adaptée pour :
mémoriser au moins une rampe de consigne commandant une augmentation en température de la pointe chauffante (6) d'une quantité déterminée à des périodes déterminées,
piloter l'augmentation en température de la pointe chauffante (6) en suivant la rampe de consigne tant que le paramètre de captage est dans une première plage de valeurs déterminée,
ralentir l'augmentation en température de la pointe chauffante (6) si le paramètre de captage est dans une deuxième plage de valeurs déterminée, distincte de la première plage de valeurs.

10. Installation de traitement (1) selon la revendication 9, dans laquelle la masse de remplissage (10) de chaque pointe chauffante (6) comprend une poudre hautement compactée de particules réfractaires à la chaleur.

11. Installation de traitement (1) selon l'une quelconque des revendications 9 à 10, dans laquelle le système de captage (15) comprend un dispositif d'aspiration (17) connecté à chaque puits d'extraction (16) et adapté pour mettre le système de captage (15) en dépression.

12. Installation de traitement (1) selon l'une quelconque des revendications 9 à 11, dans laquelle le système de captage (15) est adapté, en outre, pour traiter les vapeurs, ledit système de captage (15) comprenant notamment au moins un dispositif de traitement des vapeurs (18) choisi parmi :
- une unité de recondensation (30) adaptée pour réaliser une recondensation des vapeurs,
- une unité de thermo-catalyse adaptée pour réaliser une thermo-oxydation du polluant comprenant un préchauffage suivi d'une oxydation,
- une unité de photo-catalyse (35) adaptée pour réaliser une photo-oxydation du polluant comprenant une photolyse par rayonnement ultra-violet combinée à une oxydation,
- un bio-filtre (45) adapté pour réaliser une filtration en milieu humide,
- un filtre à charbon actif (50) adapté pour réaliser une filtration sur charbon actif.

13. Installation de traitement (1) selon l'une quelconque des revendications 9 à 12, dans laquelle le système de captage (15) est adapté, en outre, pour récupérer et traiter des eaux, ledit système de captage (15) comprenant notamment au moins un dispositif de traitement des eaux (19) choisi parmi :
- un réservoir (55) adapté pour réaliser une séparation par différence de densités,
- un stripper (60) adapté pour réaliser une extraction de polluant dissout dans les eaux par un fluide traversant lesdites eaux à contre-courant,
- un filtre à charbon actif (65) adapté pour réaliser une filtration sur charbon actif.

## Patentansprüche

1. Verfahren zur Behandlung von Erde (3), enthaltend mindestens einen zu extrahierenden Schadstoff, wobei das Behandlungsverfahren vorsieht:
- die Erde (3) auf eine Temperatur zu erhitzen, die geeignet ist, um in der Erde (3) Dämpfe, umfassend den Schadstoff in einem gasförmigen Zustand, zu erzeugen,
- die Dämpfe mittels eines Abscheidesystems (15), umfassend mindestens einen Förderschacht (16), der in die Erde (3) eingebracht ist, abzuscheiden,
wobei das Behandlungsverfahren zum Erhitzen der Erde (3) vorsieht:
- ein elektrisches System zum Erhitzen (5) zu verwenden, umfassend mindestens eine elektrische Heizerspitze (6) und eine Vorrichtung zur Versorgung (7) mit elektrischer Energie, wobei jede Heizerspitze (6) eine hohle Hülle (8) aus wärmeleitendem Material, mindestens ein elektrisches Heizelement (9), das im Innern der Hülle (8) angeordnet ist, und eine Füllmasse (10) aus einem elektrisch isolierenden und wärmeleitenden Material umfasst, wobei die Füllmasse (10), die Hülle (8) um das Heizelement (9) ausfüllt,
- die Hülle (8) jeder Heizerspitze (6) in die Erde (3) einzubringen,
- das Heizelement (9) jeder Heizerspitze (6) mit der Versorgungsvorrichtung (7) zu verbinden,
- mindestens einen Abscheideparameter, der sich auf die Dämpfe bezieht, in dem Abscheidesystem (15) zu messen, wie beispielsweise einen Abscheideparameter, ausgewählt aus einer Dampfkonzentration, einem Dampfdurchfluss, einem Dampfdruck und einer Dampftemperatur, mit mindestens einem Messfühler (20) des Abscheidesystems (15),
- die Temperatur jeder Heizerspitze (6) in Abhängigkeit vom Abscheideparameter mit einer Steuereinheit (25) zu regulieren, die mit dem Messfühler (20) verbunden ist,
wobei das Behandlungsverfahren **dadurch gekennzeichnet ist, dass** es zur Regulierung der Temperatur jeder Heizerspitze (6) vorsieht:
- mindestens eine Sollwertrampe zu speichern, die eine Temperaturerhöhung der Heizerspitze (6) um eine bestimmte Menge in bestimmten Zeiträumen steuert,
- die Temperaturerhöhung der Heizerspitze (6) zu lenken, indem der Sollwertrampe gefolgt wird, solange sich der Abscheideparameter in einem ersten bestimmten Wertbereich befindet,
- die Temperaturerhöhung der Heizerspitze (6) zu verlangsamen, wenn sich der Abscheideparameter in einem zweiten bestimmten Wertebereich befindet, der sich vom ersten Wertebereich unterscheidet.

2. Behandlungsverfahren nach Anspruch 1, das zum Erhitzen der Erde (3) vorsieht, ein stark verdichtetes Pulver aus Partikeln, die gegen die Hitze in der Füllmasse (10) beständig sind, zu verwenden.

3. Behandlungsverfahren nach Anspruch 1 oder 2, das zum Erhitzen der Erde (3) eine Vielzahl von Heizerspitzen (6) gemäß einem Netz, umfassend mindestens zwei Reihen von Heizerspitzen (6) bereitstellt, wobei jede der Reihen eine Vielzahl von ausgerichteten und in gleichem Abstand voneinander angeordneten Heizerspitzen (6) umfasst, wobei sich die Reihen der Heizerspitzen (6) parallel zueinander befinden.

4. Behandlungsverfahren nach einem der Ansprüche 1 bis 3, wobei der Schadstoff einen Dampfdruck aufweist, wobei das Behandlungsverfahren zum Erhitzen der Erde (3) vorsieht, jede Heizerspitze (6) auf eine Temperatur, die geeignet ist, den Dampfdruck des Schadstoffs in der Erde (3) zu erreichen, insbesondere auf eine Temperatur im Bereich zwischen 400 °C und 1.000 °C zu bringen.

5. Verfahren zur Behandlung nach einem der Ansprüche 1 bis 4, das zum Abscheiden der Dämpfe mindestens zwei Förderschächte (16) in gleichem Abstand von jeder Heizerspitze (6) vorsieht.

6. Behandlungsverfahren nach einem der Ansprüche 1 bis 5, das zum Abscheiden der Dämpfe vorsieht, mithilfe einer Ansaugvorrichtung (17) des Abscheidesystems (15), die mit jedem Förderschacht (16) verbunden ist, das Abscheidesystem (15) mit einem Unterdruck zu beaufschlagen.

7. Behandlungsverfahren nach einem der Ansprüche 1 bis 6, das ferner vorsieht, die Dämpfe mithilfe des Abscheidesystems (15) zu behandeln, wobei das Behandlungsverfahren insbesondere vorsieht, mindestens eine Behandlung der Dämpfe durchzuführen, ausgewählt aus:
- einer Rückkondensation der Dämpfe in einer Rückkondensationseinheit (30) des Abscheidesystems (15),
- einer thermischen Oxidation des Schadstoffs, umfassend ein Vorerhitzen, gefolgt von einer Oxidation in einer Thermokatalyseeinheit des Abscheidesystems (15),
- einer Photooxidation des Schadstoffs, umfassend eine Photolyse durch ultraviolette Strahlung, kombiniert mit einer Oxidation in einer Photokatalyseeinheit (35) des Abscheidesystems (15),
- einer Nassfiltration in einem Biofilter (45) des Abscheidesystems (15),
- einer Filtration auf Aktivkohle in einem Aktivkohlefilter (50) des Abscheidesystems (15).

8. Behandlungsverfahren nach einem der Ansprüche 1 bis 7, das ferner vorsieht, Wasser mithilfe des Abscheidesystems (15) zurückzugewinnen und zu behandeln, wobei das Behandlungsverfahren insbesondere vorsieht, mindestens eine Behandlung von Wasser durchzuführen, ausgewählt aus:
- einer Trennung mittels des Dichteunterschieds in einem Tank (55) des Abscheidesystems (15),
- einer Extraktion des in dem Wasser gelösten Schadstoffs durch ein Fluid, das in einem Stripper (60) des Abscheidesystems (15) im Gegenstrom durch dieses Wasser geleitet wird,
- einer Filtration auf Aktivkohle in einem Aktivkohlefilter (65) des Abscheidesystems (15).

9. Behandlungsanlage (1) zum Durchführen des Behandlungsverfahrens nach einem der Ansprüche 1 bis 8, wobei die Behandlungsanlage (1) Folgendes umfasst:
- ein System zum elektrischen Erhitzen (5), das geeignet ist, die Erde (3) auf eine Temperatur zu erhitzen, die geeignet ist, in der Erde (3) Dämpfe, umfassend den Schadstoff in einem gasförmigen Zustand, zu erzeugen, wobei das Erhitzungssystem (5) mindestens eine elektrische Heizerspitze (6) und eine Vorrichtung zur Versorgung (7) mit elektrischer Energie umfasst, wobei jede Heizerspitze (6) eine hohle Hülle (8) aus einem wärmeleitenden Material, mindestens ein elektrisches Heizelement (9), das im Innern der Hülle (8) angeordnet ist, und eine Füllmasse (10) aus einem elektrisch isolierenden und wärmeleitenden Material umfasst, wobei die Füllmasse (10) die Hülle (8) um das Heizelement (9) herum ausfüllt, wobei die Hülle (8) jeder Heizerspitze (6) dazu bestimmt ist, in die Erde (3) eingebracht zu werden, wobei das Heizelement (9) jeder Heizerspitze (6) dazu bestimmt ist, mit der Versorgungsvorrichtung (7) verbunden zu werden,
- ein Abscheidesystem (15), das geeignet ist, die Dämpfe abzuscheiden, wobei das Abscheidesystem (15) mindestens einen Förderschacht (16) umfasst, der dazu bestimmt ist, in die Erde (3) eingebracht zu werden, wobei das Abscheidesystem (15) mindestens einen Messfühler (20) umfasst, der geeignet ist, mindestens einen Abscheideparameter, der sich auf die Dämpfe bezieht, in dem Abscheidesystem (15) zu messen, wie beispielsweise einen Abscheideparameter, ausgewählt aus einer Dampfkonzentration, einem Dampfdurchfluss, einem Dampfdruck und einer Dampftemperatur,
- eine Steuereinheit (25), die mit dem Messfühler (20) verbunden und geeignet ist, die Temperatur jeder Heizerspitze (6) in Abhängigkeit vom Abscheideparameter zu regulieren, wobei die Steuereinheit (25) **dadurch gekennzeichnet ist, dass** sie geeignet ist:
- mindestens eine Sollwertrampe zu speichern, die eine Erhöhung der Temperatur der Heizerspitze (6) um eine bestimmte Menge in bestimmten Zeiträumen steuert,
- die Erhöhung der Temperatur der Heizerspitze (6) zu lenken, indem der Sollwertrampe gefolgt wird, solange sich der Abscheideparameter in einem ersten bestimmten Wertbereich befindet,
- die Erhöhung der Temperatur der Heizerspitze (6) zu verlangsamen, wenn sich der Abscheideparameter in einem zweiten bestimmten Wertebereich befindet, der sich vom ersten Wertebereich unterscheidet.

10. Behandlungsanlage (1) nach Anspruch 9, wobei die Füllmasse (10) jeder Heizerspitze (6) ein stark verdichtetes Pulver aus hitzebeständigen Partikeln umfasst.

11. Behandlungsanlage (1) nach einem der Ansprüche 9 bis 10, wobei das Abscheidesystem (15) eine Ansaugvorrichtung (17) umfasst, die mit jedem Förderschacht (16) verbunden und geeignet ist, das Abscheidesystem (15) mit einem Unterdruck zu beaufschlagen.

12. Behandlungsanlage (1) nach einem der Ansprüche 9 bis 11, wobei das Abscheidesystem (15) ferner geeignet ist, die Dämpfe zu behandeln, wobei das Abscheidesystem (15) insbesondere mindestens eine Vorrichtung zur Behandlung von Dämpfen (18) umfasst, ausgewählt aus:
- einer Rückkondensationseinheit (30), die geeignet ist, eine Rückkondensation der Dämpfe durchzuführen,
- einer Einheit zur thermischen Katalyse, die geeignet ist, eine thermische Oxidation des Schadstoffs durchzuführen, umfassend eine Vorerhitzung gefolgt von einer Oxidation,
- einer Photokatalyseeinheit (35), die geeignet ist, eine Photooxidation des Schadstoffs durchzuführen, umfassend eine Photolyse durch ultraviolette Strahlung kombiniert mit einer Oxidation,
- einen Biofilter (45), der geeignet ist, eine Nassfiltration durchzuführen,
- einen Aktivkohlefilter (50), der geeignet ist, eine Filtration auf Aktivkohle durchzuführen.

13. Behandlungsanlage (1) nach einem der Ansprüche 9 bis 12, wobei das Abscheidesystem (15) ferner geeignet ist, Wasser zurückzugewinnen und zu behandeln, wobei das Abscheidesystem (15) insbesondere mindestens eine Vorrichtung zur Behandlung von Wasser (19) umfasst, ausgewählt aus:
- einem Tank (55), der geeignet ist, eine Trennung mittels des Dichteunterschieds durchzuführen,
- einen Stripper (60), der geeignet ist, eine Extraktion des im Wasser gelösten Schadstoffs durch ein Fluid durchzuführen, das im Gegenstrom durch das Wasser geleitet wird,
- einen Aktivkohlefilter (65), der geeignet ist, eine Filtration auf Aktivkohle durchzuführen.

## Claims

1. Method for treating a soil (3) containing at least one pollutant to be extracted, said method of treatment providing to:
- heat the soil (3) to a temperature adapted to produce in the soil (3) vapours comprising the pollutant in a gaseous state,
- collect the vapours by the intermediary of a collection system (15) comprising at least one extraction well (16) pushed into the soil (3),
said method of treatment providing, in order to heat the soil (3), to:
- use an electric heating system (5) comprising at least one electric heating point (6) and an electric energy supply device (7), with each heating point (6) comprising a hollow sheath (8) made of heat conducting material, at least one electric heating element (9) placed inside the sheath (8) and a filling mass (10) made of electrically insulating and heat conducting material, with said filling mass (10) filling the sheath (8) around the heating element (9),
- push the sheath (8) of each heating point (6) into the soil (3);
- connect the heating element (9) of each heating point (6) to the supply device (7),
- measure at least one collection parameter concerning the vapours in the collection system (15), such as a collection parameter chosen from among a concentration, a flow rate, a pressure and a temperature of the vapours, by at least one measurement sensor (20) of the collection system (15),
- adjust in temperature each heating point (6) according to the collection parameter by a control unit (25) connected to the measurement sensor (20),
said method of treatment **characterised in that** it provides, in order to adjust in temperature each heating point (6), to:
- memorise at least one setpoint ramp that controls an increase in temperature of the heating point (6) by a determined quantity at determined periods,
- control the increase in temperature of the heating point (6) by following the setpoint ramp as long as the collection parameter is in a first determined range of values,
- slow down the increase in temperature of the heating point (6) if the collection parameter is in a second determined range of values, separate from the first range of values.

2. Method of treatment according to claim 1, providing, in order to heat the soil (3), to use a highly compacted powder of heat refractory particles in the filling mass (10).

3. Method of treatment according to claim 1 or 2, providing, in order to heat the soil (3), to disposer a plurality of heating points (6) according to a network comprising at least two rows of heating points (6), with each one of the rows comprising a plurality of heating points (6) that are aligned and equidistant in relation to one another, with the rows of heating points (6) being parallel to one another.

4. Method of treatment according to any of claims 1 to 3, wherein the pollutant has a vapour pressure, said method of treatment providing, in order to heat the soil (3), to take each electric heating point (6) to a temperature adapted to reach the vapour pressure of the pollutant in the soil (3), in particular at a temperature between 400 °C and 1000 °C.

5. Method of treatment according to any of claims 1 to 4, providing, in order to collect the vapours, to place at least two extraction well (16) at an equal distance from each heating point (6).

6. Method of treatment according to any of claims 1 to 5, providing, in order to collect the vapours, to place the collection system (15) in a vacuum by the intermediary of a suction device (17) of the collection system (15) connected to each extraction well (16).

7. Method of treatment according to any of claims 1 to 6, further providing to treat the vapours by the intermediary of the collection system (15), said method of treatment providing in particular to carry out at least one treatment of the vapours chosen from:
- a recondensation of the vapours in a recondensation unit (30) of the collection system (15),
- a thermo-oxidation of the pollutant comprising a preheating followed by oxidation in a thermo-catalysis unit of the collection system (15),
- a photo-oxidation of the pollutant comprising a photolysis via ultra-violet radiation combined with oxidation in a photo-catalysis unit (35) of the collection system (15),
- a filtration in a wet environment in a bio-filter (45) of the collection system (15),
- a filtration on active charcoal in an active charcoal filter (50) of the collection system (15).

8. Method of treatment according to any of claims 1 to 7, providing, furthermore, to recover and to treat the water by the intermediary of the collection system (15), said method of treating providing in particular to carry out at least one treatment of the water chosen from among:
- a separation via difference of densities in a reservoir (55) of the collection system (15),
- an extraction of pollutant dissolved in the water by a fluid passing through said water as a counter-current in a stripper (60) of the collection system (15),
- a filtration on active charcoal in an active charcoal filter (50) of the collection system (15).

9. Installation for treating (1) for implementing the method of treatment according to any of claims 1 to 8, said installation for treating (1) comprising:
- an electric heating system (5) adapted to heat the soil (3) at a temperature adapted to produce in the soil (3) vapours comprising the pollutant in a gaseous state; said heating system (5) comprising at least one electric heating point (6) and an electric energy supply device (7), with each heating point (6) comprising a hollow sheath (8) made of heat conducting material, at least one electric heating element (9) placed inside the sheath (8) and a filling mass (10) made of electrically insulating and heat conducting material, with said filling mass (10) filling the sheath (8) around the heating element (9), with the sheath (8) of each heating point (6) intended to be pushed into the soil (3), the heating element (9) of each heating point (6) intended to be connected to the supply device (7),
- a collection system (15) adapted to collect the vapours, with said collection system (15) comprising at least one extraction well (16) intended to be pushed into the soil (3), with the collection system (15) comprising at least one measurement sensor (20) adapted to measure at least one collection parameter in relation to the vapours in the collection system (15), such as a collecting parameter chosen from among a concentration, a flow rate, a pressure and a temperature of vapours,
- a control unit (25) connected to the measurement sensor (20) and adapted to adjust in temperature each heating point (6) according to the collection parameter, with the control unit (25) **characterised by** the fact that it is adapted to:
memorise at least one setpoint ramp controlling an increase in temperature of the heating point (6) of a determined quantity at determined periods,
control the increase in temperature of the heating point (6) by following the setpoint ramp as long as the collection parameter is in a first determined range of values,
slow down the increase in temperature of the heating point (6) if the collection parameter is in a second determined range of values, separate from the first range of values.

10. Installation for treating (1) according to claim 9, wherein the filling mass (10) of each heating point (6) comprises a highly compacted powder of heat refractory particles.

11. Installation for treating (1) according to any of claims 9 to 10, wherein the collection system (15) comprises a suction device (17) connected to each extraction well (16) and adapted to place the collection system (15) in a vacuum.

12. Installation for treating (1) according to any of claims 9 to 11, wherein the collection system (15) is furthermore adapted to treat the vapours, with said collection system (15) comprising in particular at least one device for treating vapours (18) chosen from:
- a recondensation unit (30) adapted to carry out a recondensation of vapours,
- a thermo-catalysis unit adapted to carry out a thermo-oxidation of the pollutant comprising a preheating followed by oxidation,
- a thermo-catalysis unit (35) adapted to carry out a photo-oxidation of the pollutant comprising a photolysis via ultra-violet radiation combined with oxidation,
- a bio-filter (45) adapted to carry out a filtration in a wet environment,
- an active charcoal filter (50) adapted to carry out a filtration on active charcoal.

13. Installation for treating (1) according to any of claims 9 to 12, wherein the collection system (15) is furthermore adapted to recover and to treat the water, said collection system (15) comprising in particular at least one device for treating water (19) chosen from among:
- a reservoir (55) adapted to carry out a separation via difference of densities,
- a stripper (60) adapted to carrying out an extraction of pollutant dissolved in the water by a fluid passing through said water as a counter-current,
- an active charcoal filter (65) adapted to carry out a filtration on active charcoal.
